# EUROPEAN PATENT APPLICATION

(11) **EP 4 083 895 A1**
(43) Date of publication of application: **02.11.2022**
(21) Application number: 22170319.2
(22) Date of filing: 27.04.2022
(51) Int. Cl.: G06Q 30/06, G06Q 20/40

(54) **AN ONLINE TRANSACTION SYSTEM WITH BUYER REPUTATIONS BACKGROUND**

(30) Priority: 28.04.2021 US 202117243507
(71) Applicant: eBay, Inc., San Jose, CA 95125 (US)
(72) Inventor: RAMASUBRAMANIAN, Anand, San Jose, 95125 (US); MUTHURAMAN, Alagu, San Jose, 95125 (US); GANDHI, David, San Jose, 95125 (US); MADHAVAN, Mahendar, San Jose, 95125 (US)
(74) Representative: Murgitroyd & Company

(57) **Abstract**

Systems and methods provide determining a reputation score of a buyer of a transaction of an item. An online shopping server receives buyer information and determines the reputation score of the buyer based on a transaction history of the buyer. The reputation score corresponds to a transaction type (e.g., a credit card transaction and a prepaid cash transaction) in varied levels of burden on the buyer. The online shopping server permits a buyer with a lower reputation score with a type of transaction that is higher in burden to perform for the buyer. The online shopping server performs the transaction based on the determined transaction type. The online shopping server updates the reputation score of the buyer based on a result of the transaction. Sellers of items uses reputation scores of buyers for providing distinguished sales items to buyers with higher reputations.

## Description

### BACKGROUND

Traditional shopping marketplace systems facilitate sales transactions of goods that sellers wish to sell to buyers. For example, auctioning systems receive items for sale from sellers and place them for a bidding process. Buyers prefer engaging in sales transactions with sellers who are trustworthy. The buyers need to rely on the online shopping site and the seller for assurance that the buyers will receive items that the buyers expect at a value that is consistent with the agreed price for purchase. In practice, some online shopping sites distinguish some sellers from other sellers by a number of stars or badges. The online shopping sites determine ranking of the sellers based on a number of complaints from buyers and a number of transactions without chargebacks, for example. Buyers may then select higher ranked sellers for purchasing items.

In contrast, the traditional systems often discriminate buyers based on buyer's subscription to distinct levels of services provided by sellers. For example, buyers with an optional paid subscription to add-on or premium services may receive additional features and benefits for transactions (e.g., a free shipment). In practice, trustworthiness of buyers has been relatively unavailable to the sellers. The online shopping site also has an interest in reducing transaction payment failures caused by unreliable buyers. Some systems enforce a screening process and automatically eliminate incentives for less trustworthy buyers. Such systems may cause these buyers to provide negative reviews for the online shopping site. Thus, developing a technology that better meets the needs of the sellers and the online shopping site to improve transaction efficiencies and facilitate types of transactions that match buyer trustworthiness while minimizing trade-offs would be desirable.

It is with respect to these and other general considerations that the aspects disclosed herein have been made. Also, although relatively specific problems may be discussed, it should be understood that the examples should not be limited to solving the specific problems identified in the background or elsewhere in this disclosure.

### SUMMARY

According to the present disclosure, the above and other issues are resolved by automatically generating a reputation score of a buyer based on occurrences of canceled transactions in a transaction log.

The present disclosure relates to automatically generating a reputation score of a participant of a transaction and performing the transaction based on the reputation score at an online shopping site. In particular, an online shopping server receives buyer information and generates a reputation score for the buyer based on a transaction history of the buyer. A reputation score generator generates a reputation score of the buyer based at least on a combination of weighted scores associated with failed incidents by the buyer and a number of incidents. For example, having more occasions of successful transactions improves the reputation score. In contrary, incidents of charge-backs, cancellation, and an authorization decline reduce the reputation score. The reputation score is visible to the buyer. Additionally or alternatively, the reputation score is visible to the seller of the transaction.

The present disclosure further determines a transaction type for the buyer based on the reputation score. A transaction type indicates a method of performing a transaction (e.g., prepaid cash, a debit card, a credit card, etc.). Some transaction types (e.g., a credit card transaction) represent a higher risk of performing a transaction than others (e.g., a pre-paid cash transaction). A reputation score corresponds to a transaction type. For example, a buyer with a higher reputation score engages a transaction reserved for trustworthy buyers. A transaction type balances levels of burden to the buyers for engaging in the purchase transaction with a level of trustworthiness of the buyer.

The disclosed technology includes generating and updating a reputation score for a buyer based on a purchase history of the buyer. In particular, a reputation score generator uses various parameters in the purchase history, including a number of transactions with various incidents, for generating a reputation score. For example, outcomes of transactions include a successful completion, a charge-back, a cancellation, an authorization decline, and positive / negative feedback on the seller by sellers after a transaction. The reputation score generator generates the reputation score that represents the latest reputation of the seller. For example, the reputation score may be a sum of points from individual transactions, an average of the points, and the like. Additionally or alternatively, the reputation score generator uses a classification model based on a neural network for determining the reputation score by taking into account additional parameters including a frequency of the purchase transactions, monetary amounts of respective purchase transactions, categories of items that the buyer has purchased, and the like. Additionally or alternatively, the online shopping server provides a combination of reputation scoring and enforcing transactions based on the reputation scores as an additional service to sellers to discriminate premium buyers.

This Summary is provided to introduce a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTIONS OF THE DRAWINGS

Non-limiting and non-exhaustive examples are described with reference to the following figures.
FIG. 1 illustrates an overview of an example system for automatically generating a reputation score in accordance to aspects of the present disclosure.
FIG. 2 illustrates an example of data structures of buyer information in accordance with aspects of the present disclosure.
FIGS. 3A-E illustrate examples of data structures of reputation scores and transaction s in accordance with aspects of the present disclosure.
FIG. 4 illustrates an example of data structures of a transaction history in accordance with aspects of the present disclosure.
FIG. 5 illustrates an example of a method for generating a reputation score in accordance with aspects of the present disclosure.
FIG. 6 illustrates an example of a method for retrieving and updating a reputation score in accordance with aspects of the present disclosure.
FIG. 7 is a block diagram illustrating example physical components of a computing device with which aspects of the disclosure may be practiced.

### DETAILED DESCRIPTION

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein; rather, these aspects are provided so that this disclosure will be thorough and complete, and will fully convey the scope of the aspects to those skilled in the art. Aspects may be practiced as methods, systems, or devices. Accordingly, aspects may take the form of a hardware implementation, an entirely software implementation or an implementation combining software and hardware aspects. The following detailed description is, therefore, not to be taken in a limiting sense.

An online shopping system, particularly online auctioning systems, facilitates purchase transactions for buyers capable of performing transactions as required by the online shopping systems. For example, buyers often pay for purchases using credit cards because the online shopping systems often provide platforms for accepting credit card transactions. In some aspects, online shopping systems may separate sellers from buyers when settling transactions. For example, some online shopping systems provide for instant credit card transactions for buyers to make purchases, while paying revenues to sellers on a bimonthly schedule. In this case, sellers may not necessarily be aware of transaction types and buyer trustworthiness.

Issues may arise when sellers engage in transactions without understanding the risk levels associated with various buyers. Some buyers may rarely receive authorization declines when using credit cards. Other buyers may often receive canceled transactions. Additionally, some buyers may have a history of frequently returning items. Sellers are interested in selling items to buyers with a minimal history of returns to improve business efficiency and profits. Thus, online shopping sites suffer when buyers have a history of frequent returns and/or transaction cancellations. Every canceled transaction or return is a lost opportunity to sell to another buyer who purchases the item without cancellations or returns.

The present application solves this issue by distinguishing buyers based on risk. For instance, the system may automatically generate and update a reputation score for a buyer based on the buyer's history of cancellations and charge-backs. Higher incidents of cancellations and/or charge-backs may cause generating a lower reputation score, whereas lower incidents of cancellations and/or charge-backs may cause generating a higher reputation score. Additionally or alternatively, the system may specify a transaction type that matches a buyer's reputation score to account for the risk of the buyer. For example, the online shopping systems may impose protections (e.g., prepaid cash) for buyers with lower reputation scores for higher-risk transaction types.

As discussed in more detail below, the present disclosure relates to generating and updating reputation scores for buyers. The present disclosure further relates to imposing different types of purchase transactions based on buyer reputation scores. In particular, the disclosed technology generates the reputation scores based on a purchase history of a buyer. Additionally or alternatively, the disclosed technology provides buyer reputation scores to sellers for becoming more cognizant of higher-risk buyers.

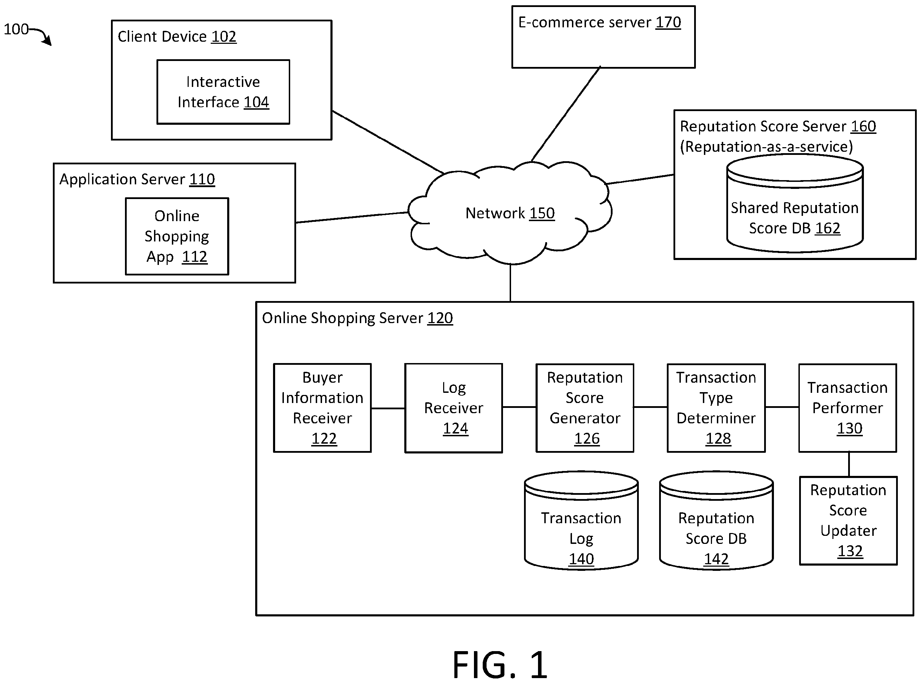

FIG. 1 illustrates an overview of an example system 100 for automatically generating a reputation score for a buyer. System 100 represents a system for generating a reputation score of a buyer based on incidents of non-complete transactions by the buyer stored in a transaction log. System 100 includes a client device 102, an application server 110, an online shopping server 120, and a network 150. The client device 102 communicates with the application server 110, which includes one or more sets of instructions to execute as applications on the client device 102. The application server 110 includes an online shopping app 112 (i.e., an application). The one or more sets of instructions in the application server 110 may provide an interactive user interface through an interactive interface 104.

The online shopping server 120 includes a buyer information receiver 122, a log receiver 124, a reputation score generator 126, a transaction type determiner 128, a transaction performer 130, a reputation score updater 132, a transaction log 140, and a reputation score database 142. The network 150 provides network connectivity among the client device 102, the application server 110, and the online shopping server 120.

The client device 102 connects with the application server 110 via the network 150 to execute applications that include user interactions through the interactive interface 104. The application server 110 interacts with the client device 102 and the online shopping server 120 via the network 150 to perform online shopping as a seller or a buyer of items.

The client device 102 is a general computer device providing user-input capabilities e.g., via the interactive interface 104 for online shopping over the network 150. In some aspects, the client device 102 optionally receives user input from a seller of items. The seller uploads information about an item for sales transaction in an online shopping marketplace. The buyer searches for items for sales and purchases items of interests. The information about the item includes image data of the item, a brief description of the item, price information, quantity information, and the like. The interactive interface 104 may render a graphical user interface associated with a web browser, for example. In aspects, the client device 102 may communicate over the network 150 with the application server 110.

The application server 110 is a server that enables a seller (who may post items for sale) and a buyer (who purchases the items) for interactively using the system 100 on the client device 102. The application server 110 may comprise applications including the online shopping app 112. The online shopping app 112 may provide a rendering of items for a purchase by the user.

In aspects, the online shopping app 112 may connect with the buyer information receiver 122 of the online shopping server 120. The buyer accesses an online shopping site and purchase items. In some aspects, the online shopping server provides online auctioning through a bidding process. The buyers may place bids to purchase items. In some other aspects, the buyer may purchase an item by using a debit card or a credit card. The online shopping app 112 receives credit card information for the buyers to buy items. In some other aspects, the buyer may purchase items by prepaid cash payment. The buyer transmits or makes a payment by cash prior to placing an order of an item for transaction.

Additionally or alternatively, the online shopping app 112 enables the buyer interactively canceling a transaction. In aspects, the online shopping app 112 displays a list of orders being placed and provides user interface for the buyer to select a transaction for cancellation.

The online shopping server 120 represents the applications/systems used for generating and updating reputation scores for buyers of transactions. The online shopping server 120 facilitates selling and purchasing of items on the online shopping site. The online shopping server 120 may use a transaction log to generate reputation scores for buyers. The buyer information receiver 122 receives information about a buyer from the online shopping app 112 used by the buyer through the interactive interface 104 on the client device 102. Among other things, the information about the buyer includes the buyer's name and a buyer identifier.

The log receiver 124 receives entries of a transaction log associated with the buyer from the transaction log 140. The transaction log may include transaction records from the buyer's previous transactions to purchase items. For example, the transaction record may include date and time of a transaction, an outcome of the transaction, and a monetary amount of the transaction. The outcome of the transaction may include a successful completion, a cancellation based on a request of the buyer, a cancellation based on a request of the seller, a cancellation because of an authorization decline, and the like.

The reputation score generator 126 generates a reputation score of a buyer. In aspects, the reputation score generator 126 uses the transaction history of the buyer to generate the reputation score. For example, the reputation score generator 126 generates a reputation score by computing a product of weighted values associated with outcomes of transactions and a number of instances of the transactions. The weight may vary depending on distinct types of outcomes of transactions. For example, a successful completion of a transaction translates into a weight value of one. A cancellation made by the buyer and charge-backs translate into a weight value of negative three, for example. The reputation score may represent an aggregated score of weight values of transaction. In some other aspects, the reputation score may be an average score of respective weighted scores assigned to outcome of transactions. The reputation score generator 126 stores the reputation score in the reputation score database 142. In some aspects, the reputation score generator 126 retrieves existing reputation scores of buyers from the reputation score database 142.

In yet some other aspects, the reputation score generator 126 may use a neural network for classifying a buyer into a class of reputations. The class has a value that corresponds to a reputation score. The neural network may include parameters that have been trained based on transaction records as training data. The training data may include example buyer information with correct reputation scores and a set of transactions for training. For example, the training data may include a buyer with a reputation score of 10 when the buyer had ten successfully completed transactions of items without charge-backs. Use of the neural network provides a level of performance that is superior in performance to predict a reputation score as compared to searching through a transaction log of a particular buyer and determining the reputation score. A use of the neural network is more efficient than searching in databases when a size of the transaction log and a number of buyers become large (e.g., millions of daily transactions involving tens of thousands of types of items being sold among hundreds of thousands of participants of transactions).

In some other aspects, the reputation score generator 126 may notify the determined reputation score of the buyer to a seller of the transaction. The seller may use the reputation score of the buyer for providing distinguished sales items to buyers with higher reputations. For example, the seller may exclusively offer high-value items to the buyers with higher reputations to generate a marketplace that is mutually trusted by both the seller and the buyer. In aspects, the online shopping server may provide the reputation scores of buyers as a value-add service to the sellers.

The transaction type determiner 128 determines a transaction type. The transaction type represents a type of transactions for the buyer. For example, distinct types of transactions may include a pre-paid cash transaction, a debit card transaction, a credit card transaction, and a monthly invoicing. In aspects, the transaction type determiner 128 uses the reputation score to determine the transaction type. Higher reputation scores correspond to transaction types with a higher risk level but with a less burden on the buyer to facilitate the transaction. Lower reputation scores correspond to transaction types with a lower risk level, which is often a higher burden on the buyer. Accordingly, the transaction type balances a level of burden with a trustworthiness of a buyer. In some aspects, the lower reputation scores may cause determining a transaction type that asks for more details and/or verifications about the buyer.

The transaction performer 130 performs a transaction the buyer to buy an item. In aspects, the transaction performer 130 may specify a type of transaction to the buyer based on a reputation level of the buyer. For example, the online shopping site may require a buyer with a lower reputation score to make a prepaid cash payment to place an order of the item. In some other example, the online shopping site may allow a buyer with a higher reputation score to make a choice between use of a credit card or a monthly invoicing for making payment for the transaction of the item.

Additionally or alternatively, the transaction performer 130 may determine one or more non-transactional services for the buyer. Examples of the one or more non-transactional services may include a customer reward program that provides additional benefits to the buyer with a reputation score above a predetermined threshold. Other examples of the non-transactional services may include a recommendation to the buyer to improve the reputation score by a remedy action (e.g., verifying short-message (SMS) / email addresses, storing a validated credit card information, etc.).

The reputation score updater 132 updates the reputation score in the reputation score database 142 after the transaction performer 130 completes a transaction. Regularly updating the reputation scores upon completions of transactions eliminates the needs to regenerate reputation scores.

Additionally or alternatively, the reputation score updater 132 may transmit the reputation score and at least a part of information about the buyer to a reputation score server 160. In aspects, the reputation score server 160 receives reputation scores of buyers and sellers from e-commerce servers (e.g., E-commerce server 170). The reputation score server stores the reputation scores of buyers and sellers in one or more databases (e.g., shared reputation score database 162) and generates reputation scores for use by merchants, consumers, and other ecommerce services (e.g., the E-commerce server 170). In some aspects, the reputation score server provides reputation score services to merchants and online shopping providers as a reputation-as-a-service. Subscribers of the reputation-as-a-service may receive up-to-date reputation scores of buyers and sellers to customize features of e-commerce and other services for respective buyers and sellers. The customized features may be associated with a risk of fraudulent activities and/or credibility associated with the respective buyers and sellers.

The transaction log 140 is a database that stores transaction logs. Each entry of a transaction log may include a date, time, and a completion status of the transaction, a buyer, a seller, an item identifier, a quantity of items, and a total price of the transaction.

The reputation score database 142 includes a database that stores reputation scores of buyers. In aspects, the reputation score database 142 includes seller identifiers and corresponding reputation scores.

Additionally or alternatively, the online shopping server 120 may generate, updated, and transmit reputation scores for the sellers in a similar manner. For example, sellers with a reputation score that is greater than a predetermined threshold may receive preference for exposure to more buyers on the online shopping site and/or referrals to buyers with interests in items that the sellers sell.

As will be appreciated, the various methods, devices, applications, features, etc., described with respect to FIG. 1 are not intended to limit the system 100 to being performed by the particular applications and features described. Accordingly, additional controller configurations may be used to practice the methods and systems herein and/or features and applications described may be excluded without departing from the methods and systems disclosed herein.

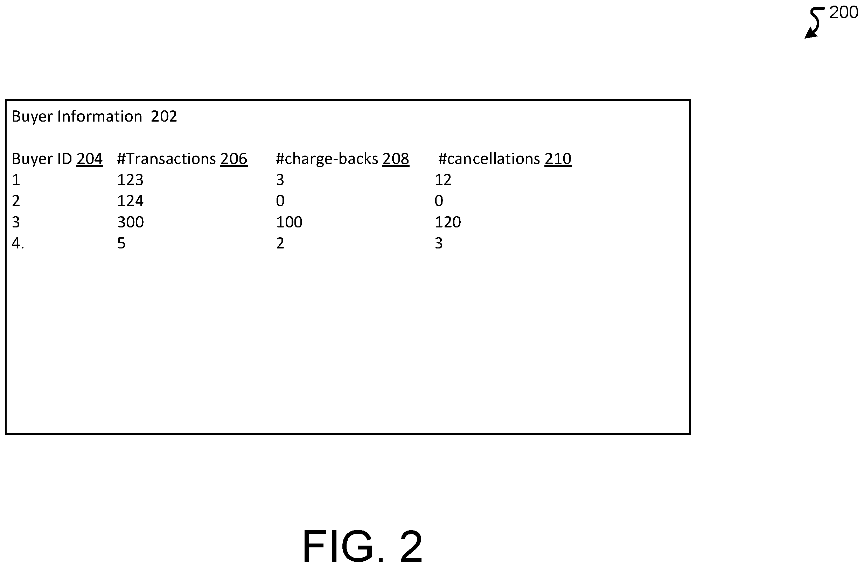

FIG. 2 illustrates an example of data structures of buyer information in accordance to aspects of the present disclosure. In FIG. 2, the data structure 200A illustrates buyer information 202. The buyer information 202 may include a buyer ID 204, a number of transactions 206, a number of charge-backs 208, and a number cancellations 210. The buyer ID 204 includes buyer identifiers. The number of transactions 206 indicates a total number of transactions associated with the buyer. The number of charge-backs 208 indicates a number of incidents of a reversal of a credit card transaction. The number of cancellations 210 indicates a number of canceled transactions. In aspects, the number of cancellations 210 may indicate a number of transactions, for which the buyer requested the cancellation.

For example, buyer #1 has had 123 transactions on the online shopping site. Of the 123 transactions, the buyer #1 had three incidents of charge-backs. The buyer #1 canceled 12 transactions. Buyer #2 has had 124 transactions on the online shopping site. Of the 123 transactions, the buyer #1 had no incident of charge-backs. The buyer #1 canceled no transactions. Buyer #3 has had 300 transactions on the online shopping site. Of the 300 transactions, the buyer #1 had 100 incidents of charge-backs. The buyer #1 canceled 120 transactions. In aspects, the buyer information 200 may be a part of a transaction log as summary data about buyers.

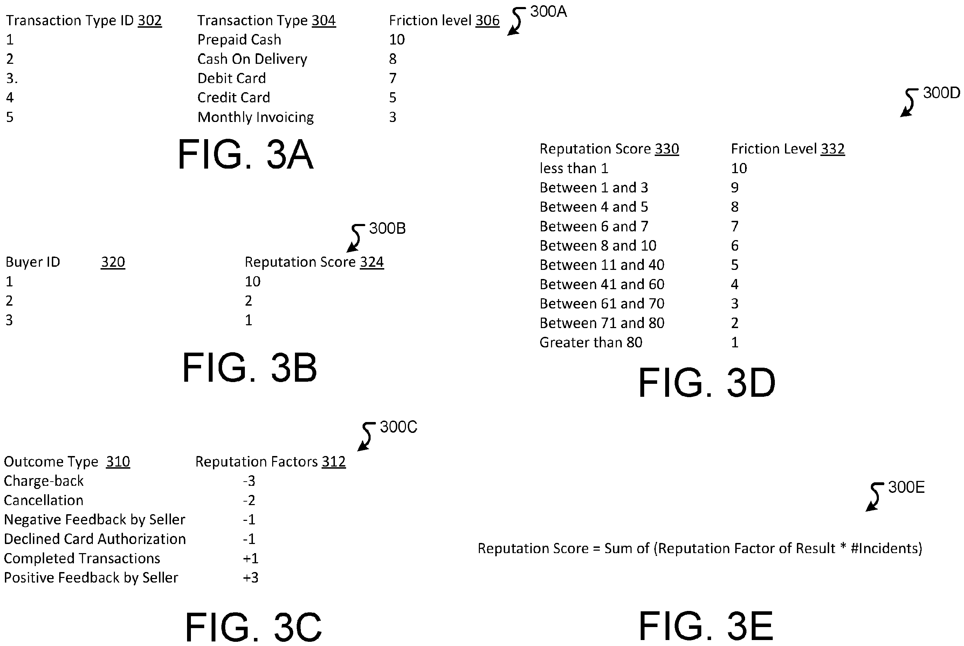

FIGS. 3A-E illustrate examples of data structures of reputation scores and transaction types in accordance with the aspects of the present disclosure. FIG. 3A illustrates an example of transaction type information. A transaction type information table 300A includes a transaction type ID 302, a transaction type 304, and a friction score 306. The transaction type ID 302 identifies respective transaction types. The transaction type 304 describes respective transaction types. A transaction type indicates how the online shopping site facilitates a transaction for the buyer. The friction score 306 indicates a level of friction (e.g., an ease of use or a level of burden) to the buyers.

For example, a transaction type #1 is a prepaid cash transaction with a friction score of 10. A transaction type #2 is a cash-on-delivery transaction with a friction score of 8. A transaction type #3 is a debit card transaction with a friction score of 7. A transaction type #4 is a credit card transaction with a friction score of 5. A transaction type #5 is a monthly invoicing transaction with a friction score of 3.

In aspects, the prepaid cash transaction with a friction score of 10 indicates higher burden (thus a friction) upon the buyer to facilitate a transaction than the credit card transaction with a friction score of 5. The online shopping system may use the transactions with various levels of friction scores by associating respective transaction types with distinct reputation scores. Accordingly, buyers with a reputation score corresponds to a particular transaction type to engage in transactions of items.

FIG. 3B illustrates an example of associations between buyers and reputation scores in accordance with the aspects of the present disclosure. A buyer-reputation table 300B includes buyer ID 320 and reputation score 324. Buyer ID 320 identifies a buyer. The reputation score 324 indicates a reputation score associated with the buyer.

For example, buyer 1 has a reputation score of 10. Buyer 2 has a reputation score of 2. Buyer 3 has a reputation score of 1. In aspects, a buyer with a higher reputation score reflects being higher in reputation than another buyer with a lower reputation score. Accordingly, buyer 1 has better reputation than buyer 3 does.

FIG. 3C illustrates an example of outcome types of transactions in accordance with the aspects of the present disclosure. A transaction outcome types table 300C includes outcome type 310 and reputation factors 312. The outcome type 310 indicates an outcome of a transaction. The reputation factors 312 indicate a reputation factor associated with respective outcome type.

For example, charge-back (i.e., a reversal of a credit card payment) has a reputation factor value of -3. Cancellation of a transaction corresponds to a reputation factor value of -2. A negative feedback about the buyer made by a seller corresponds to a reputation factor value of - 1. A authorization decline during a transaction corresponds to a reputation factor of -1. A completed transaction corresponds to a reputation factor of +1. And, a positive feedback about the buyer made by a seller corresponds to a reputation factor of +3.

In aspects, the reputation score generator may use reputation factors and a number of incidents of respective outcome types for generating reputation scores. For example, the reputation score generator may generate a reputation score of -1 when a buyer with one incident of a charge-back and two successfully completed transactions. Each incident of a charge-back has a reputation factor of -3; thus -3 times one incident = -3. Each incident of a complete transaction corresponds to a reputation factor of + 1; thus +1 times two incidents = +2. Accordingly a sum of the two scores for respective outcome types is -1 (e.g., -3 + 2 = -1). In aspects, charge-back has more negative weight than a positive weight of a successful completion of a transaction.

FIG. 3D illustrates an example data structure of associations between reputation scores and friction scores. A reputation score - friction score table 300D includes a reputation score 330 and a friction score 332. The reputation score 330 indicates a level of reputation of a participant (e.g., a buyer) of a transaction. The friction score indicates a level of friction (e.g. burden) upon the participant (e.g. the buyer) to engage in the transaction.

In aspects, a higher value of a reputation score indicates that the buyer has more reputations in engaging in transactions and thus has a lower risk of causing issues in performing transactions. A higher value of a friction score indicates a higher level of burden imposed on the buyer to engage in a transaction.

For example, a buyer with a reputation score of less than one corresponds to a friction score of 10. In aspects, the online shopping system may impose a higher burden of engaging in a transaction to such buyers with lower reputation scores. A buyer with a reputation score between 1 and 3 corresponds to a friction score of 9. A buyer with a reputation level that is greater than 80 correspond to a friction score of 1. Thus, the online shopping may impose a lower burden of engaging in a transaction to such buyers with higher reputation scores.

FIG. 3E illustrates an example of a process for generating a reputation score in accordance with the aspects of the present disclosure. A computation 300E illustrates generating the reputation score based on weighted reputation factors and a number of instances of successful / failed transactions. A reputation score may be a sum of products of reputation factors and a number of incidents. For example, the reputation score generator may generate a reputation score of +6 to a buyer with ten successfully completed transaction (e.g., +10) and two cancellations (e.g., -4). Additionally or alternatively, the reputation score may be an average of reputation factures of respective transactions. Higher incidents of failed transactions (e.g., cancellations and/or charge-backs) may cause generating a lower reputation score, whereas a lower incidents of failed transactions may cause generating a higher reputation score.

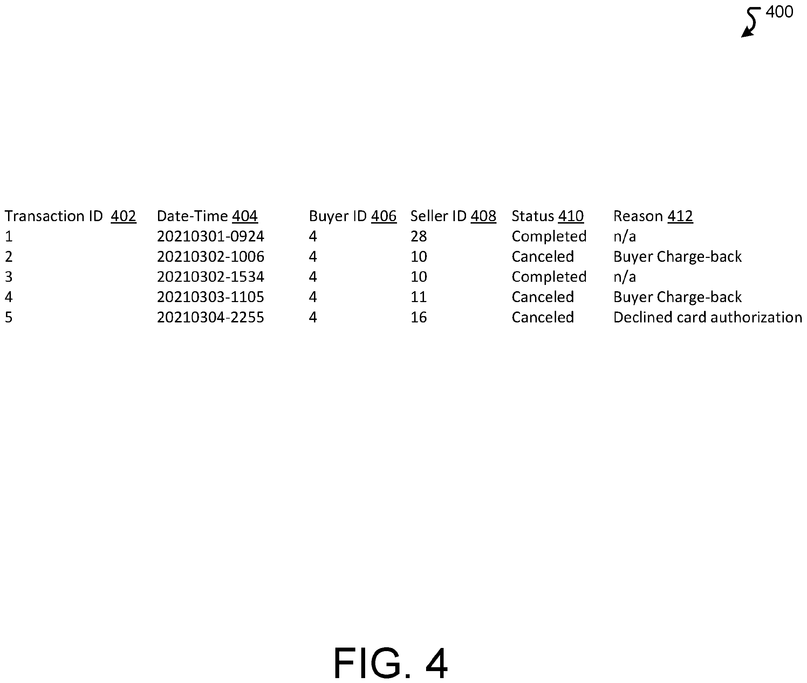

FIG. 4 illustrates an example of a transaction log in accordance with the aspects of the present disclosure. The transaction log 400 includes transaction ID 402, date-time 404, buyer ID 406, seller ID 408, status 410 and reason 412. The transaction ID 402 identifies respective transactions. The date-time 404 indicates date and time of the transaction. Buyer ID 406 identifies a buyer of the transaction. Seller ID 408 identifies a seller of the transaction. The status 410 indicates an outcome of the transaction. Reason 412 indicates a reason for the outcome of the transaction.

For example, a transaction #1 held at 20210301-0904 included a buyer #3 and a seller #28; a status of the transaction is Completed, without note on reason. A transaction #2 held at 20210302-1006 included a buyer #3 and a seller #10; a status of the transaction is Canceled because the buyer canceled and had a charge-back. A transaction #3 held at 20210302-1534 included a buyer #3 and a seller #10; a status of the transaction is Completed, without note on reason. A transaction #4 held at 20210303-1105 included a buyer #3 and a seller #11; a status of the transaction is Canceled because the buyer canceled and had a charge-back. A transaction #5 held at 20210304-2255 included a buyer #3 and a seller #16; a status of the transaction is Canceled because of an authorization decline.

In aspects, the reputation score generator may read the transaction log for generating a reputation score for a buyer. Additionally or alternatively, the reputation score generator may generate a buyer information table (e.g., the buyer information 202 in FIG. 2).

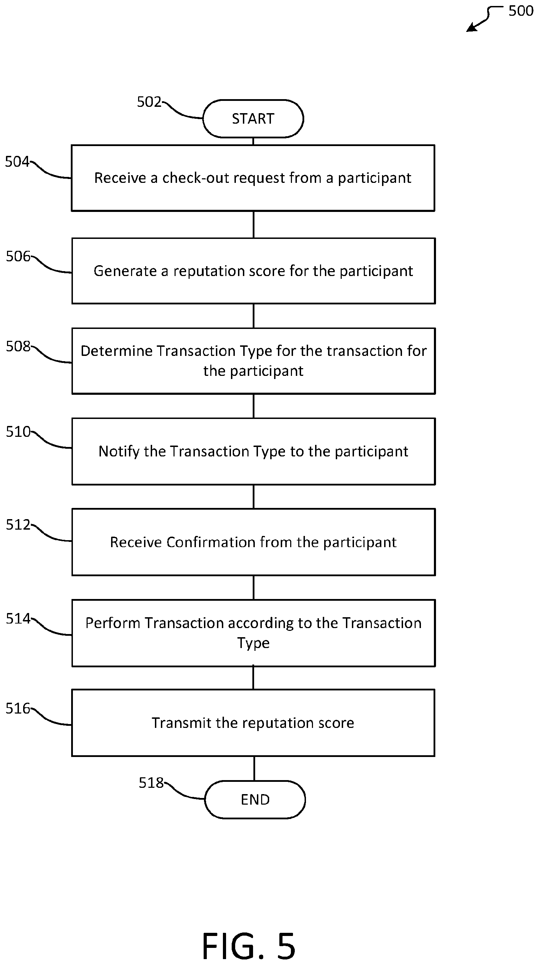

FIG. 5 is an example of a method for generating a reputation score in accordance with aspects of the present disclosure. A general order of the operations for the method 500 is shown in FIG. 5. Generally, the method 500 begins with start operation 502 and ends with end operation 518. The method 500 may include more or fewer steps or may arrange the order of the steps differently than those shown in FIG. 5. The method 500 can be executed as a set of computer-executable instructions executed by a computer system and encoded or stored on a computer readable medium. Further, the method 500 can be performed by gates or circuits associated with a processor, an ASIC, an FPGA, a SOC or other hardware device. Hereinafter, the method 500 shall be explained with reference to the systems, components, devices, modules, software, data structures, data characteristic representations, signaling diagrams, methods, etc., described in conjunction with FIGS. 1, 2, 3, 4, 6 and 7.

Following start operation 502, the method 500 begins with receive operation 504, which receives a check-out request from a participant (e.g., a buyer) of a sales transaction on an online shopping site. In aspects, the online shopping systems determine a type of transactions after the participant selects an item and proceeds to a check-out for start a transaction.

Generate operation 506 generates a reputation score for the participant. In aspects, the reputation score generator generates the reputation score based on a number of transactions with various types of outcomes in a transaction history of the participant. For example, a buyer may have incidents of charge-backs in the buyer's previous transactions. In aspects, the generate operation 506 generates the reputation scores based on an aggregate value of products of reputation factors associated with outcomes and a number of incidents of the respective transaction. Some transactions may negatively affect upon a reputation score more than others may. For example, a charge-back may more negatively impact reputations than an authorization decline. Processing a charge-back after a transaction may cause more burden upon sellers and the online shopping site than the declined credit card during a transaction.

Determine operation 508 determines a transaction type for the transaction for the participant. In particular, the determine operation 508 uses the reputation score of the participant to determine a transaction type that is reflective of the reputation. For example, the determine operation 308 determines a prepaid cash transaction to a buyer with a low reputation score of 1. In aspects, the determine operation 508 may use a combination of the reputation score - friction score table 300D and the transaction type information table 300A for determining a transaction type.

Notify operation 510 notifies the transaction type to the participant. In aspects, the online shopping server may notify the determined transaction type to the participant and requests for an acknowledgment before proceeding with the transaction of the item.

Receive operation 512 receives a confirmation from the participant to proceed with the transaction. In aspects, the online shopping server may provide an option for the participant to cancel the transaction or hold the transaction for a predetermined time period. In some other aspects, the online shopping server may notify the seller about the cancellation or the transaction on hold for the seller to consider alternative arrangements for the transaction.

Perform operation 514 performs the transaction according to the transaction type. For example, the perform operation 514 may request the participant to enter credit card information when the determined transaction type is a credit card transaction. The perform operation 514 may proceed with the credit card transaction upon receiving sufficient information for performing the transaction.

Transmit operation 516 transmits the reputation score and at least a part of information about the participant to a reputation score server. The reputation score server stores the reputation score for the participant (i.e., as a seller and a buyer) for use in a reputation-as-a-service. Subscribers of the reputation-as-a-service may include merchants, e-commerce sites, and consumers. In aspects, the subscribers may use reputation scores to identify risks of fraudulent and/or credibility associated with respective buyers and sellers. The method 500 ends with the end operation 518.

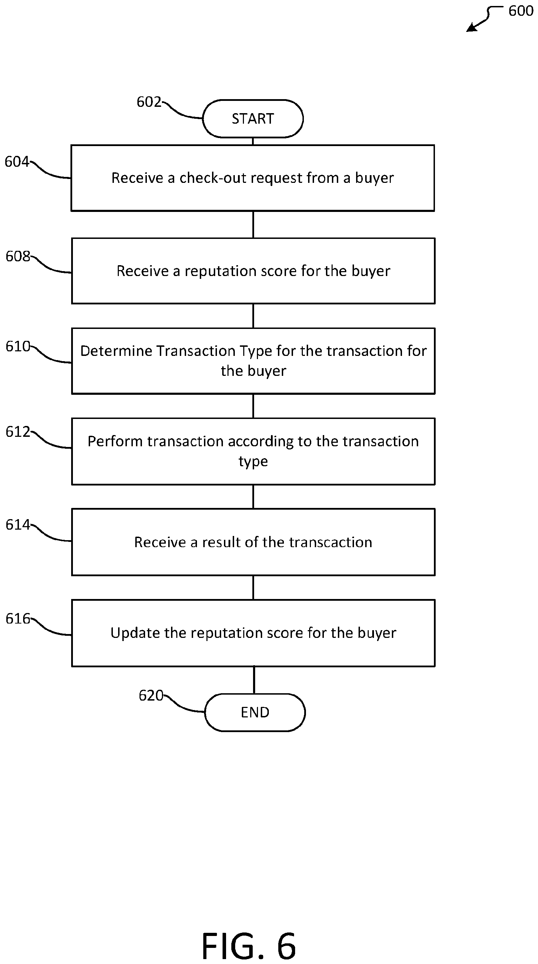

FIG. 6 is an example of a method for generating a reputation score in accordance with aspects of the present disclosure. A general order of the operations for the method 500 is shown in FIG. 6. Generally, the method 600 begins with start operation 602 and ends with end operation 620. The method 600 may include more or fewer steps or may arrange the order of the steps differently than those shown in FIG. 6. The method 600 can be executed as a set of computer-executable instructions executed by a computer system and encoded or stored on a computer readable medium. Further, the method 600 can be performed by gates or circuits associated with a processor, an ASIC, an FPGA, a SOC or other hardware device. Hereinafter, the method 600 shall be explained with reference to the systems, components, devices, modules, software, data structures, data characteristic representations, signaling diagrams, methods, etc., described in conjunction with FIGS. 1, 2, 3, 4, 5, and 7.

Following start operation 602, the method 600 begins with receive operation 604, which receives a check-out request from a participant (e.g., a buyer) of a sales transaction on an online shopping site. In aspects, the online shopping systems determine a type of transactions after the participant selects an item and proceeds to a check-out for start a transaction.

Receive operation 608 retrieves a reputation score for the buyer. In aspects, the receive operation 608 uses a neural network to determine the most likely transaction type for the buyer. The neural network has been trained based on a transaction history of various types of buyers. The neural network may classify the buyer based on the buyer's transaction history into a class with a corresponding reputation score.

Determine operation 610 determines a transaction type for the transaction for the buyer. In particular, the determine operation 610 uses the reputation score of the participant to determine a transaction type that is reflective of the reputation.

Perform operation 612 performs a transaction according to the determined transaction type. In aspects, the online shopping system may determine a pre-paid cash as a transaction type for the user. The perform operation 612 requests a deposit of cash in a predetermined amount by the buyer. The perform operation 612 may resume the transaction for completion (e.g., shipment of the item) once the online shopping server determines a receipt of the prepaid cash. In some other aspects, the perform operation 612 may solicit for credit card information from the buyer when the determined transaction type is a credit card transaction.

Receive operation 614 receives an outcome of the transaction. In aspects, the outcome may include one or a successful completion, a cancellation made by the buyer with a charge-back, an authorization decline, and the like.

Update operation 616 updates the reputation score for the buyer. In aspects, the update operation 616 updates the reputation score in the reputation database (e.g., the reputation score database 142). Additionally or alternatively, the update operation 616 may retrain the neural network based on the outcome of the transaction. The retrained neural network improves accuracy of classifying buyers into classes of reputation scores and corresponding transaction types. Additionally or alternatively, the update operation 616 may include transmitting the reputation score and at least a part of information about the buyer to a reputation score server 160.

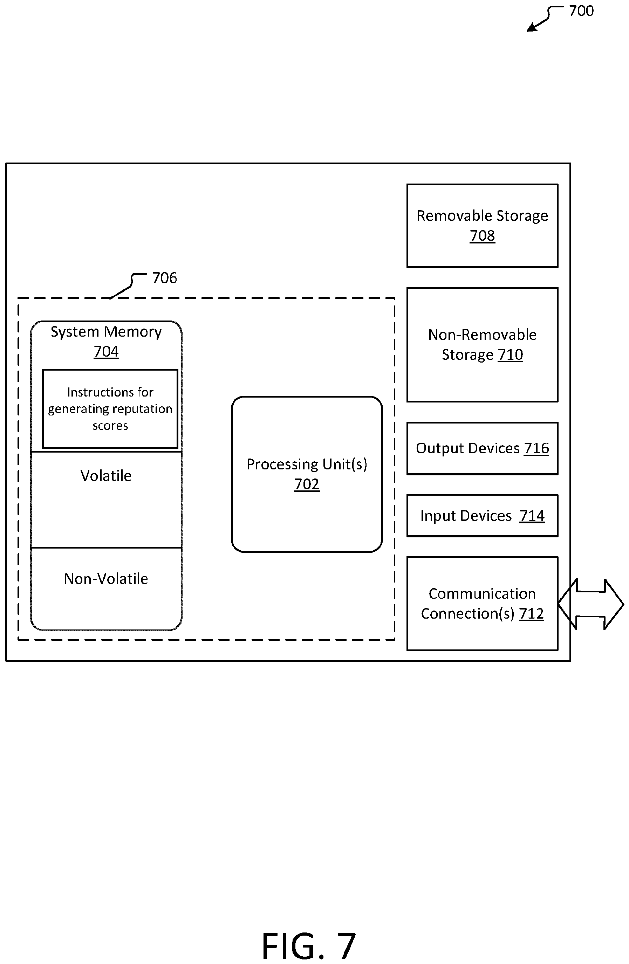

FIG. 7 illustrates a simplified block diagram of the device with which aspects of the present disclosure may be practiced in accordance with aspects of the present disclosure. One or more of the present embodiments may be implemented in an operating environment 700. This is only one example of a suitable operating environment and is not intended to suggest any limitation as to the scope of use or functionality. Other well-known computing systems, environments, and/or configurations that may be suitable for use include, but are not limited to, personal computers, server computers, hand-held or laptop devices, multiprocessor systems, microprocessor-based systems, programmable consumer electronics such as smartphones, network PCs, minicomputers, mainframe computers, distributed computing environments that include any of the above systems or devices, and the like.

In its most basic configuration, the operating environment 700 typically includes at least one processing unit 702 and memory 704. Depending on the exact configuration and type of computing device, memory 704 (instructions to perform generating reputation scores as described herein) may be volatile (such as RAM), non-volatile (such as ROM, flash memory, etc.), or some combination of the two. This most basic configuration is illustrated in FIG. 7 by dashed line 706. Further, the operating environment 700 may also include storage devices (removable, 708, and/or non-removable, 710) including, but not limited to, magnetic or optical disks or tape. Similarly, the operating environment 700 may also have input device(s) 714 such as keyboard, mouse, pen, voice input, on-board sensors, etc. and/or output device(s) 716 such as a display, speakers, printer, motors, etc. Also included in the environment may be one or more communication connections, 712, such as LAN, WAN, a near-field communications network, point to point, etc.

Operating environment 700 typically includes at least some form of computer readable media. Computer readable media can be any available media that can be accessed by at least one processing unit 702 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media. Computer storage media does not include a carrier wave or other propagated or modulated data signal. A computer readable medium can comprise a computer storage medium and a transient medium such as a carrier wave or signal.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

The operating environment 700 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets and the Internet.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

The present disclosure relates to systems and methods for performing a transaction by an ecommerce server based on an automatically generated reputation score of a participant of the transaction according to at least the examples provided in the sections below. The method comprises receiving a transaction log of a participant to the transaction, wherein the transaction log includes a first count of previous transactions and a second count of canceled transactions associated with the participant, wherein the participant is one of a buyer or a seller to the transaction; determining, based on a combination of a weighted first count of previous transactions and a weighted second count of canceled transactions, a reputation score of the participant, wherein the reputation score indicates a level of trustworthiness of the participant to the transaction; identifying, based on the determined reputation score, a transaction type for the participant, wherein the transaction type balances a level of burden to the participant for engaging in the transaction with the level of trustworthiness of the participant; providing an indication of the identified transaction type to the participant; enabling the transaction to be performed using the determined transaction type; and transmitting the reputation score of the participant, wherein the transmitting causes a reputation score server to update a shared reputation score of the participant for another ecommerce server. The participant is the buyer of the transaction, and wherein higher incidents of the canceled transactions cause generating a lower reputation score. The method further comprises identifying, based on the determined reputation score, the transaction type for the participant, wherein the transaction type corresponds to a friction score associated with the determined reputation score, wherein the transaction type includes at least one of: a credit card transaction associated with a first friction score, a debit card transaction associated with a second friction score, or a prepaid cash transaction associated with a third friction score, wherein the first friction score corresponds to a higher reputation score than the second friction score and/or the third friction score. The reputation score is based at least on incident of one or more of: a charge-back; a cancellation of a completed transaction; a feedback associated with the buyer by the seller; or an authorization decline of a credit card; and wherein the reputation score is associated with one of the first friction score or the second friction score. The method further comprises determining, based on the received transaction log, a reputation score of the participant using a neural network, wherein the reputation score indicates a level of trustworthiness of the participant to the transaction, and wherein the neural network is a trained neural network for classifying the participant into at least a class associated with the reputation score. The method further comprises updating, based on the transaction, the reputation score. The method further comprises retraining, based on the transaction, the neural network.

Another aspect of the technology relates to a system for performing a transaction by an ecommerce server based on an automatically generated reputation score of a participant of a transaction. The system comprises a processor; and a memory storing computer-executable instructions that when executed by the processor cause the system to: receive a transaction log of a participant to the transaction, wherein the transaction log includes a first count of previous transactions and a second count of canceled transactions associated with the participant, wherein the participant is one of a buyer or a seller to the transaction; determine, based on a combination of a weighted first count of previous transactions and a weighted second count of the canceled transactions, a reputation score of the participant, wherein the reputation score indicates a level of trustworthiness of the participant to the transaction; identify, based on the determined reputation score, a transaction type for the participant, wherein the transaction type balances a level of burden to the participant for engaging in the transaction with the level of trustworthiness of the participant; provide an indication of the identified transaction type to the participant; enabling the transaction to be performed using the determined transaction type; and transmitting the reputation score of the participant, wherein the transmitting causes a reputation score server to update a shared reputation score of the participant for another ecommerce service. The participant is the buyer of the transaction, and wherein higher incidents of the canceled transactions cause generating a lower reputation score. The computer-executable instructions when executed further cause the system to: identifying, based on the determined reputation score, the transaction type for the participant, wherein the transaction type corresponds to a friction score associated with the determined reputation score, wherein the transaction type includes at least one of: a credit card transaction associated with a first friction score, a debit card transaction associated with a second friction score, or a prepaid cash transaction associated with a third friction score, wherein the first friction score corresponds to a higher reputation score than the second friction score and/or the third friction score. The reputation score is based at least on incident of one or more of: a charge-back; a cancellation of a completed transaction; a feedback associated with the buyer by the seller; or an authorization decline of a credit card; and wherein the reputation score is associated with one of the first friction score or the second friction score. The computer-executable instructions when executed further cause the system to: determine, based on the received transaction log, a reputation score of the participant using a neural network, wherein the reputation score indicates a level of trustworthiness of the participant to the transaction, and wherein the neural network is a trained neural network for classifying the participant into at least a class associated with the reputation score. The computer-executable instructions when executed further cause the system to: update, based on the transaction, the reputation score. The computer-executable instructions when executed further cause the system to: retrain, based on the transaction, the neural network.

In still further aspects, the technology relates to a computer-readable non-transitory recording medium storing computer-executable instructions. The computer-executable instructions when executed further cause the system to receive a transaction log of a participant to the transaction, wherein the transaction log includes a first count of previous transactions and a second count of canceled transactions associated with the participant, wherein the participant is one of a buyer or a seller to the transaction; determine, based on a combination of a weighted first count of previous transactions and a weighted second count of canceled transactions, a reputation score of the participant, wherein the reputation score indicates a level of trustworthiness of the participant to the transaction; identify, based on the determined reputation score, a transaction type for the participant, wherein the transaction type balances a level of burden to the participant for engaging in the transaction with the level of trustworthiness of the participant; provide an indication of the identified transaction type to the participant; enabling the transaction to be performed using the determined transaction type; and transmit the reputation score of the participant, wherein the transmitting causes a reputation score server to update a shared reputation score of the participant for another ecommerce server. The participant is the buyer of the transaction, and wherein higher incidents of the canceled transactions cause generating a lower reputation score. The computer-executable instructions when executed further cause the system to: identifying, based on the determined reputation score, the transaction type for the participant, wherein the transaction type corresponds to a friction score associated with the determined reputation score, wherein the transaction type includes at least one of: a credit card transaction associated with a first friction score, a debit card transaction associated with a second friction score, or a prepaid cash transaction associated with a third friction score, wherein the first friction score corresponds to a higher reputation score than the second friction score and/or the third friction score. The reputation score is based at least on incident of one or more of: a charge-back; a cancellation of a completed transaction; a feedback associated with the buyer by the seller; or an authorization decline of a credit card; and wherein the reputation score is associated with one of the first friction score or the second friction score. The computer-executable instructions when executed further cause the system to determine, based on the received transaction log, a reputation score of the participant using a neural network, wherein the reputation score indicates a level of trustworthiness of the participant to the transaction, and wherein the neural network is a trained neural network for classifying the participant into at least a class associated with the reputation score. The computer-executable instructions when executed further cause the system to retrain, based on the transaction, the neural network.

Any of the one or more above aspects in combination with any other of the one or more aspect. Any of the one or more aspects as described herein.

## Claims

1. A method for performing a transaction by an ecommerce server based on an automatically generated reputation score of a participant of the transaction, the method comprising:
receiving a transaction log of a participant to the transaction, wherein the transaction log includes a first count of previous transactions and a second count of canceled transactions associated with the participant, wherein the participant is one of a buyer or a seller to the transaction;
determining, based on a combination of a weighted first count of previous transactions and a weighted second count of canceled transactions, a reputation score of the participant, wherein the reputation score indicates a level of trustworthiness of the participant to the transaction;
identifying, based on the determined reputation score, a transaction type for the participant, wherein the transaction type balances a level of burden to the participant for engaging in the transaction with the level of trustworthiness of the participant;
providing an indication of the identified transaction type to the participant;
enabling the transaction to be performed using the identified transaction type; and
transmitting the reputation score of the participant, wherein the transmitting causes a reputation score server to update a shared reputation score of the participant for another ecommerce server.

2. The method of claim 1, wherein the participant is the buyer of the transaction, and wherein higher incidents of the canceled transactions cause generating a lower reputation score.

3. The method of claim 1 or claim 2, further comprising:
identifying, based on the determined reputation score, the transaction type for the participant, wherein the transaction type corresponds to a friction score associated with the determined reputation score, wherein the transaction type includes at least one of:
a credit card transaction associated with a first friction score,
a debit card transaction associated with a second friction score, or
a prepaid cash transaction associated with a third friction score,
wherein the first friction score corresponds to a higher reputation score than the second friction score and/or the third friction score.

4. The method of claim 3, wherein the reputation score is based at least on incident of one or more of:
a charge-back;
a cancellation of a completed transaction;
a feedback associated with the buyer by the seller; or
an authorization decline of a credit card; and
wherein the reputation score is associated with one of the first friction score or the second friction score.

5. The method of any one of claims 1 to 4, the method further comprising:
determining, based on the received transaction log, a reputation score of the participant using a neural network, wherein the reputation score indicates a level of trustworthiness of the participant to the transaction, and wherein the neural network is a trained neural network for classifying the participant into at least a class associated with the reputation score.

6. The method of any one of claims 1 to 5, the method further comprising:
updating, based on the transaction, the reputation score.

7. The method of claim 5, the method further comprising:
retraining, based on the transaction, the neural network.

8. A system for performing a transaction by an ecommerce server based on an automatically generated reputation score of a participant of a transaction, the system comprising:
a processor; and
a memory storing computer-executable instructions that when executed by the processor cause the system to:
receive a transaction log of a participant to the transaction, wherein the transaction log includes a first count of previous transactions and a second count of canceled transactions associated with the participant, wherein the participant is one of a buyer or a seller to the transaction;
determine, based on a combination of a weighted first count of previous transactions and a weighted second count of the canceled transactions, a reputation score of the participant, wherein the reputation score indicates a level of trustworthiness of the participant to the transaction;
identify, based on the determined reputation score, a transaction type for the participant, wherein the transaction type balances a level of burden to the participant for engaging in the transaction with the level of trustworthiness of the participant;
provide an indication of the identified transaction type to the participant;
enabling the transaction to be performed using the identified transaction type; and
transmitting the reputation score of the participant, wherein the transmitting causes a reputation score server to update a shared reputation score of the participant for another ecommerce service.

9. The system of claim 8, wherein the participant is the buyer of the transaction, and wherein higher incidents of the canceled transactions cause generating a lower reputation score.

10. The system of claim 8 or claim 9, the computer-executable instructions when executed further cause the system to:
identifying, based on the determined reputation score, the transaction type for the participant, wherein the transaction type corresponds to a friction score associated with the determined reputation score, wherein the transaction type includes at least one of:
a credit card transaction associated with a first friction score,
a debit card transaction associated with a second friction score, or
a prepaid cash transaction associated with a third friction score,
wherein the first friction score corresponds to a higher reputation score than the second friction score and/or the third friction score.

11. The system of claim 10, wherein the reputation score is based at least on incident of one or more of:
a charge-back;
a cancellation of a completed transaction;
a feedback associated with the buyer by the seller; or
an authorization decline of a credit card; and
wherein the reputation score is associated with one of the first friction score or the second friction score.

12. The system of any one of claims 8 to 11, the computer-executable instructions when executed further cause the system to:
determine, based on the received transaction log, a reputation score of the participant using a neural network, wherein the reputation score indicates a level of trustworthiness of the participant to the transaction, and wherein the neural network is a trained neural network for classifying the participant into at least a class associated with the reputation score.

13. The system of any one of claims 8 to 12, the computer-executable instructions when executed further cause the system to:
update, based on the transaction, the reputation score.

14. The system of claim 12, the computer-executable instructions when executed further cause the system to:
retrain, based on the transaction, the neural network.

15. A computer-readable medium carrying computer-executable instructions that when executed by a processor cause a computer system to carry out the method of any one of claims 1 to 7.
